# EUROPÄISCHE PATENTSCHRIFT

(11) **EP 2 986 438 B1**
(45) Veröffentlichungstag und Bekanntmachung des Hinweises auf die Patenterteilung: **26.12.2018**
(21) Anmeldenummer: 14724996.5
(22) Anmeldetag: 08.04.2014
(51) Int. Cl.: B33Y 40/00, B29C 64/118

(54) **WERKZEUGKOPF**
TOOL HEAD
TÊTE D'OUTIL

(30) Priorität: 19.04.2013 DE 102013103973
(43) Veröffentlichungstag der Anmeldung: 24.02.2016
(73) Patentinhaber: FIT AG, 92331 Lupburg (DE)
(72) Erfinder: FRUTH, Carl, 92331 Parsberg (DE)
(74) Vertreter: Schneider, Andreas
(86) Internationale Anmeldenummer: PCT/EP2014/000934
(87) Internationale Veröffentlichungsnummer: WO 2014/169995

(56) Entgegenhaltungen:
- US-A1- 2007 228 590
- US-A1- 2012 189 729

## Beschreibung

Die Erfindung betrifft einen Werkzeugkopf zur Verwendung in einer Vorrichtung zur Herstellung eines dreidimensionalen Objektes durch Schmelzschichtung. Darüber hinaus betrifft die Erfindung eine Vorrichtung zur Herstellung eines dreidimensionalen Objektes durch Schmelzschichtung mit einem solchen Werkzeugkopf.

Aus dem Bereich des Rapid Prototyping ist ein Fertigungsverfahren bekannt, das als "Fused Deposition Modeling" (FDM) oder "Schmelzschichtung" bezeichnet wird. Dabei wird ein dreidimensionales Objekt schichtweise unter Verwendung eines schmelzfähigen Modelliermaterials (Aufbaumaterials), üblicherweise eines Kunststoffes, aufgebaut. Entsprechende Vorrichtungen werden auch als 3D-Drucker bezeichnet.

Bei dem Verfahren wird das Modelliermaterial durch Erwärmung verflüssigt und mit Hilfe einer in einer Fertigungsebene in x-y-Richtung frei verfahrbaren Extrudiereinheit schichtweise auf einer Bauplattform abgelegt. Entsprechend der aufgebrachten Schichtdicke wird die Bauplattform in z-Richtung abgesenkt. Nach dem Extrudieren des Modelliermaterials kühlt dieses ab und erstarrt. Die einzelnen Schichten verbinden sich dabei zu dem gewünschten dreidimensionalen Objekt.

Das verwendete Modelliermaterial liegt zumeist in fester Form vor, üblicherweise in Gestalt eines Filamentstranges. Das Modellierfilament liegt dabei in der Regel in Rollenform vor.

Es ist in diesem Fall beliebig lang, auf einer Spule aufgewickelt und wird von dort dem 3D-Drucker kontinuierlich zugeführt. Alternativ liegt das Modellierfilament in Form kurzer Stangen bzw. Stäbe vor, die dem 3D-Drucker nacheinander zugeführt werden. Die Zufuhr des Modelliermaterials zu der Extrudiereinheit erfolgt in beiden Fällen mit Hilfe von antreibbaren Vorschubelementen, beispielsweise an gegenüberliegenden Seiten des Filaments angreifenden Transportrollen, Zahnrädern oder dergleichen.

Herkömmliche 3D-Drucker verwenden bisher zumeist Druckköpfe (Werkzeugköpfe) mit lediglich einem einzigen Extruderwerkzeug. Aus verschiedenen Gründen, beispielsweise dann, wenn zum Aufbau eines Objektes mehr als ein Modelliermaterial verarbeitet werden soll, ist es von Vorteil, wenn der 3D-Drucker einen Werkzeugkopf mit mehreren Extruderwerkzeugen aufweist. Beispielsweise kann das erste Extruderwerkzeug ein erstes Modelliermaterial aufschmelzen und ein zweites Extruderwerkzeug kann ein von dem ersten Material verschiedenes, zweites Modelliermaterial aufschmelzen. Wenn das erste Modelliermaterial für das eigentliche Objekt verwendet wird, kann das zweite Modelliermaterial beispielsweise zum Aufbau von Stützstrukturen dienen, die nach dem Aushärten des Objektes leicht wieder entfernt werden können. Da der Wechsel des Extruderwerkzeugs bzw. des gesamten Werkzeugkopfes entfällt, verkürzt sich bei der Verwendung mehrerer Extruderwerkzeuge die insgesamt für den Aufbau des Objektes benötigte Aufbauzeit. Werkzeugköpfe mit mehreren Extruderwerkzeugen sind bekannt.

Nachteilig bei den bekannten Werkzeugköpfen mit mehreren Extruderwerkzeugen ist es, daß zum Antrieben der Vorschubelemente jedes Extruderwerkzeug einen eigenen Antrieb aufweist, zumeist in Gestalt eines kleinen Elektromotors. Dadurch sind die bekannten Werkzeugköpfe mit mehreren Extruderwerkzeugen vergleichsweise groß, schwer, kompliziert im Aufbau und teuer.

In US 2007/0228590 ist eine Extrudiereinheit beschrieben, die zwei Düsen umfaßt, wobei abwechselnd der ersten Düse ein erstes Material und der zweiten Düse ein zweites Material zugeführt wird. Hierfür ist ein motorangetriebenes Antriebsrad vorgesehen, das umschaltbar entweder der ersten Aufbaulinie oder der zweiten Aufbaulinie zugeordnet ist. Die Düsen sind jedoch nur alternativ antreibbar.

In US 2012/189729 ist eine Antriebstechnik beschrieben, bei der zwei Motoren erforderlich sind. Dadurch lassen sich die Vortriebsgeschwindigkeiten der Filamente unabhängig voneinander steuern. Die Verwendung von zwei Motoren ist aber teuer.

Eine Aufgabe der vorliegenden Erfindung ist es, eine preiswertere Vorrichtung zur Herstellung eines dreidimensionalen Objektes durch Schmelzschichtung bereitzustellen. Diese Aufgabe wird durch einen Werkzeugkopf nach Anspruch 1 bzw. eine Vorrichtung nach Anspruch 8 gelöst. Vorteilhafte Ausführungen der Erfindung sind in den Unteransprüchen angegeben.

Der erfindungsgemäß Werkzeugkopf zur Verwendung in einer Vorrichtung zur Herstellung eines dreidimensionalen Objektes durch Schmelzschichtung ist gekennzeichnet durch wenigstens zwei antreibbare Werkzeuge, von denen wenigstens eines ein Extruderwerkzeug zum Aufschmelzen eines für den schichtweisen Aufbau des Objektes geeigneten Modelliermaterials ist, durch einen gemeinsamen Antrieb für die wenigstens zwei antreibbaren Werkzeuge, wobei der Antrieb bei dem wenigstens einen Extruderwerkzeug für den Vorschub des Modelliermaterials in eine Extrudiereinheit dient, und durch eine Auswahleinrichtung, mit deren Hilfe eine Wirkverbindung zwischen wenigstens einem aus der Anzahl der antreibbaren Werkzeuge ausgewählten Werkzeug und dem Antrieb herstellbar ist.

Mit der Erfindung wird eine Vorrichtung zur Herstellung eines dreidimensionalen Objektes durch Schmelzschichtung geschaffen, die gegenüber herkömmlichen Vorrichtungen preiswerter herstellbar ist. Der Werkzeugkopf ist dadurch im Vergleich zu den aus dem Stand der Technik bekannten Werkzeugköpfen kleiner, leichter, einfacher im Aufbau und billiger herstellbar.

Eine Kernidee der Erfindung ist es, für den Werkzeugkopf nur noch einen gemeinsamen Antrieb zu verwenden, der für alle antreibbaren Werkzeuge nutzbar ist. Eine Auswahleinrichtung dient zur Herstellung der gerade benötigten Wirkverbindung zwischen Antrieb und Werkzeug. Die Art der in dem Werkzeugkopf verwendeten Werkzeuge ist nicht festgelegt. Typischerweise handelt es sich bei wenigstens einem der Werkzeuge um ein Extruderwerkzeug zum Aufschmelzen eines für den schichtweisen Aufbau des Objektes geeigneten Modelliermaterials. In diesem Fall dient der Antrieb für den Vorschub des Modelliermaterials in die Extrudiereinheit. Bei weiteren antreibbaren Werkzeugen des Werkzeugkopfes kann es sich beispielsweise um eine Fräse oder ein anderes Werkzeug zur Materialbearbeitung handeln.

Von Vorteil ist weiterhin, daß die Auswahleinrichtung sowohl derart ausbildbar ist, daß sie die Wirkverbindung für jedes antreibbare Werkzeug einzeln herstellt, als auch derart, daß sie die Wirkverbindung für mehrere antreibbare Werkzeuge gleichzeitig herstellt. Bedingt durch die Bauart der Auswahleinrichtung ist die Anzahl der verbindbaren Werkzeuge dabei nicht beschränkt, beispielsweise auf lediglich zwei Werkzeuge. Statt dessen können mit der vorliegenden Erfindung auch drei, vier oder fünf Werkzeuge durch ein und denselben Antrieb angetrieben werden.

Sind wenigstens zwei Extruderwerkzeuge vorgesehen, dann ist die Auswahleinrichtung vorzugsweise zumindest zum Herstellen der Wirkverbindung zwischen einem auswählbaren Extruderwerkzeug und dem Antrieb ausgebildet. Dadurch lassen sich mehrere Extruderwerkzeuge auswählbar antreiben, so daß ohne einen Wechsel des Extruderwerkzeugs bzw. des gesamten Werkzeugkopfes unterschiedliche Modelliermaterialien aufgeschmolzen werden können. Typischerweise erfolgt das Aufschmelzen der unterschiedlichen Modelliermaterialien nacheinander.

In einer vorteilhaften Ausführungsform der Erfindung ist die Auswahleinrichtung derart ausgebildet, daß zwei oder mehr Extruderwerkzeuge gleichzeitig angetrieben werden. Dann können zwei oder mehr Modelliermaterialien gleichzeitig aufgeschmolzen werden. Die Herstellung des Objektes ist dann nicht durch eine sich lediglich abwechselnde Zufuhr von Modelliermaterial beschränkt.

Weist der Antrieb eine von einem Motor angetriebene Antriebswelle auf, dann ist diese Antriebswelle in einer definierten Weise an alle antreibbaren Werkzeuge ankoppelbar. Während des Ankoppelns bzw. durch das Ankoppeln, also das Herstellen der Wirkverbindung mit dem Antrieb, erfolgt zugleich die Werkzeugauswahl. Da vorteilhafterweise stets ein antreibbares Werkzeug angekoppelt ist, ist eine neue Werkzeugauswahl stets gleichbedeutend mit einem Werkzeugwechsel. Ein Wechsel eines Extruderwerkzeugs ist beispielsweise dann erforderlich, wenn innerhalb einer Aufbauschicht nacheinander mehrere Modelliermaterialien verwendet werden sollen.

Für das Herstellen der Wirkverbindung mit dem Antrieb hat sich eine Ausführungsform der Erfindung als ganz besonders vorteilhaft erwiesen, bei der dasjenige wenigstens eine antreibbare Werkzeug, welches mit dem Antrieb in Wirkverbindung gebracht werden soll, von einer Ruhestellung, in der das Werkzeug nicht in Wirkverbindung mit dem Antrieb steht, in eine Arbeitsstellung, in der das Werkzeug in Wirkverbindung mit dem Antrieb steht überführbar und zu diesem Zweck relativ zu der Antriebswelle bewegbar ist. Die Auswahleinrichtung ist dann ausgebildet zum Bewegen dieses Werkzeugs relativ zu der Antriebswelle, um die Wirkverbindung zwischen diesem wenigstens einen Werkzeug und dem Antrieb herzustellen.

Da bei dieser Ausführungsform der Erfindung stets das Werkzeug als ganzes bewegt wird, folgt automatisch, daß sich jeweils nur die ausgewählten antreibbaren Werkzeuge in ihrer Arbeitsstellung und alle anderen antreibbaren Werkzeuge des Werkzeugkopfs in ihrer Ruhestellung oberhalb der Arbeitsebene befinden. In einer Ausführungsform der Erfindung wird stets nur ein einziges antreibbares Werkzeug ausgewählt und es befindet sich daher stets nur ein einziges antreibbares Werkzeug in der Arbeitsposition. In einer anderen Ausführungsform der Erfindung wird die von der Erfindung bereitgestellte Möglichkeit des Mehrfachantriebs genutzt, indem mehrere Werkzeuge gleichzeitig ausgewählt sind und sich daher in der Arbeitsposition befinden.

In einer Abwandlung dieser Ausführungsformen wird nicht das gesamte Werkzeug, sondern lediglich ein Antriebselement dieses Werkzeugs, bei einem Extruderwerkzeug beispielsweise eine Transportrolle oder ein Zahnrad, das zum Vorschub des Modelliermaterials dient, von einer Ruhestellung, in der das Antriebselement des Werkzeugs nicht in Wirkverbindung mit dem Antrieb steht, in eine Arbeitsstellung, in der das Antriebselement des Werkzeugs in Wirkverbindung mit dem Antrieb steht, überführt und zu diesem Zweck relativ zu der Antriebswelle bewegt, um die Wirkverbindung zwischen diesem Antriebselement des Werkzeugs und dem Antrieb herzustellen. Dies setzt selbstverständlich voraus, daß das Antriebselement entsprechend von Stellung zu Stellung überführbar und relativ zu der Antriebswelle bewegbar ist. In dieser Ausführungsform verändert sich bei Herstellung der Wirkverbindung mit dem Antrieb nicht zwangsläufig die Lage des Werkzeugs, so daß auf eine geeignete andere Art und Weise sichergestellt wird, daß sich alle nicht benötigten Werkzeuge oberhalb der Arbeitsebene befinden.

Alternativ oder zusätzlich zu den beiden soeben beschriebenen vorteilhaften Varianten, bei denen das Werkzeug gemeinsam mit einem Antriebselement des Werkzeugs oder aber lediglich dieses Antriebselement relativ zu der Antriebswelle bewegbar ist, sind weitere, konstruktiv etwas aufwendigere, aber dennoch vorteilhafte Varianten möglich, in denen die Antriebswelle bewegbar und von einer Ruhestellung, in der sie nicht mit dem wenigstens einen Werkzeug, welches mit dem Antrieb in Wirkverbindung gebracht werden soll, oder mit dem Antriebselement dieses Werkzeugs in Wirkverbindung steht, in eine Arbeitsstellung, in der sie mit diesem Werkzeug oder mit dem Antriebselement dieses Werkzeugs in Wirkverbindung steht, überführbar ist. Die Auswahleinrichtung ist dann ausgebildet zum Bewegen der Antriebswelle relativ zu dem Antriebselement dieses Werkzeugs oder relativ zu diesem Werkzeug, um die Wirkverbindung zwischen diesem wenigstens einen Werkzeug und dem Antrieb herzustellen. Auch hier wird durch geeignete Verkehrungen sichergestellt, daß sich alle nicht benötigten Werkzeuge oberhalb der Arbeitsebene befinden.

Das wenigstens eine antreibbare Werkzeug, das mit dem Antrieb in Wirkverbindung gebracht werden soll, kann auf verschiedene Arten von der einen Stellung in die andere Stellung überführbar sein. In einer konstruktiv besonders einfachen und daher wenig fehleranfälligen Ausführungsform der Erfindung ist das wenigstens eine antreibbare Werkzeug um eine vorteilhafterweise werkzeugeigene Schwenkachse schwenkbar, die vorzugsweise fest am Werkzeugkopf angeordnet ist.

Die Konstruktion kann weiter vereinfacht werden, wenn das wenigstens eine antreibbare Werkzeug durch eine elastische Biegeverformung aus einer der Stellungen in die andere Stellung auslenkbar ausgeführt ist. Hierzu ist ein geeignetes Werkzeugteil, insbesondere ein Gehäuse- oder Rahmenelement des Werkzeugs, biegeelastisch verformbar. Das Werkzeug bzw. das Werkzeugteil ist vorteilhafterweise an wenigstens einem Haltepunkt fest mit dem Werkzeugkopf verbunden. Eine gegebenenfalls mit einem Lager versehene Schwenkachse, wie in der zuvor beschriebenen Ausführungsform, ist dann nicht erforderlich.

Die Auswahl der gewünschten antreibbaren Werkzeuge, für welche eine Wirkverbindung mit dem gemeinsamen Antrieb hergestellt werden soll, kann auf verschiedene Weise erfolgen. Als ganz besonders geeignet hat sich eine Ausführungsform der Erfindung erwiesen, bei der die Auswahleinrichtung eine drehbare Nockenwelle mit einer Anzahl Steuernocken umfaßt. Jeder Steuernocken dient bei einer Drehung der Nockenwelle zum Überführen wenigstens eines antreibbaren Werkzeugs von seiner Ruhestellung in seine Arbeitsstellung und/oder von seiner Arbeitsstellung in seine Ruhestellung. Vorzugsweise ist jeder Steuernocken genau einem Werkzeug zugeordnet.

Besonders vorteilhaft ist es in diesem Zusammenhang, wenn ein mit der Nockenwelle verbundener, mit Eingriffen versehener Schaltkranz vorgesehen ist. Vorzugsweise ist dieser Schaltkranz mittels eines Betätigungselementes betätigbar derart, daß eine definierte Eingreifbewegung des Betätigungselementes in die Eingriffe des Schaltkranzes eine Drehung der Nockenwelle um einen definierten Drehwinkel bewirkt, um eine Auswahl eines oder mehrerer Werkzeuge vorzunehmen.

Zu diesem Zweck weist die Vorrichtung zur Herstellung eines dreidimensionalen Objektes ein Betätigungselement zum Betätigen des Schaltkranzes auf. Mit Hilfe eines Werkzeugkopfantriebs, der ohnehin vorgesehen ist, um den Werkzeugkopf während des Schichtaufbaus in der Fertigungsebene zu verfahren, wird der Werkzeugkopf gegen das ortfeste, beispielsweise an einem Gehäuse- oder Rahmenteil der Vorrichtung befestigte Betätigungselement bewegt derart, daß das Betätigungselement in eine der Eingriffe des Schaltkranzes eingreift und durch eine definierte Eingreifbewegung die Nockenwelle um einen definierten Drehwinkel dreht. Jede Eingreifbewegung bewirkt somit eine Drehung der Nockenwelle um einen bestimmten Drehwinkel, abhängig von der konkreten Ausführung des Schaltkranzes. Je nach Ausgangsstellung der Nockenwelle und je nachdem, welche Drehstellung der Nockenwelle zur Auswahl eines antreibbaren Werkzeugs gewünscht ist, ist entweder eine einzige Eingreifbewegung ausreichend oder aber es sind mehrere Eingreifbewegungen notwendig, um die gewünschte Position der Steuernocken herbeizuführen. Der Werkzeugkopf wird dann entsprechend der benötigten Anzahl der Eingreifbewegungen mehrmals gegen das ortsfeste Betätigungselement gefahren. In einer alternativen Variante ist das Betätigungselement beweglich ausgeführt und wird entsprechend gegen den in einer geeigneten Position feststehenden Werkzeugkopf gefahren, um die gewünschte Drehung der Nockenwelle zu bewirken. Alternativ dazu kann die Nockenwelle auch motorisch angetrieben und entsprechend angesteuert werden; ein Schaltkranz und ein Betätigungselement sind dann nicht erforderlich.

Soll immer nur ein einziges antreibbares Werkzeug aktiv sein, d. h. in Wirkverbindung mit dem Antrieb stehen, dann wird bei einem Werkzeugwechsel sichergestellt, daß das bisher angekoppelte und sich in seiner Arbeitsstellung befindende erste Werkzeug in seine Ruhestellung überführt wird, während das neue, zweite Werkzeug in seiner Arbeitsstellung überführt wird. Das Überführen des nicht mehr aktiven ersten Werkzeugs in seiner Ruhestellung kann dabei auf verschiedene Weise erfolgen. In einer Ausführungsform der Erfindung sind Rückführelemente vorgesehen, die das Werkzeug selbsttätig in seine Ruhestellung überführen, sobald die Wirkverbindung mit dem Antrieb getrennt ist. Bei den Rückführelementen handelt es sich beispielsweise um auf das Werkzeug wirkende Federelemente, die in der Arbeitsstellung des Werkzeugs unter Spannung stehen und eine Rückführung des Werkzeugs in seine Ruhestellung bewirken. In einer anderen Ausführungsform erfolgt das Überführen des Werkzeugs in seine Ruhestellung bei einer Drehung der Nockenwelle um einen definierten Drehwinkel mit Hilfe entsprechend vorgesehener Steuernocken der Nockenwelle. In einer weiteren Ausführungsform der Erfindung, in der ein Werkzeug mit wenigstens einem elastisch biegbaren Werkzeugteil verwendet wird, erfolgt die Überführung des Werkzeugs in seine Ruhestellung dadurch, daß eine selbsttätige Rückverformung des Werkzeugs bzw. des Werkzeugteils in die Ausgangsform erfolgt. Die beschriebenen Möglichkeiten zur Überführung eines Werkzeugs zurück in seine Ruhestellung sind entsprechend in Fällen anwendbar, wenn zwei oder mehr antreibbare Werkzeuge gleichzeitig aktiviert, andere Werkzeuge hingegen deaktiviert bzw. abgekoppelt werden sollen.

Weist der Antrieb eine von einem Motor angetriebene Antriebswelle auf, dann ist diese Antriebswelle in einer definierten Weise an alle antreibbaren Werkzeuge ankoppelbar. Während des Ankoppelns bzw. durch das Ankoppeln, also das Herstellen der Wirkverbindung mit dem Antrieb, erfolgt zugleich die Werkzeugauswahl. Da vorteilhafterweise stets ein antreibbares Werkzeug angekoppelt ist, ist eine neue Werkzeugauswahl stets gleichbedeutend mit einem Werkzeugwechsel. Ein Wechsel eines Extruderwerkzeugs ist beispielsweise dann erforderlich, wenn innerhalb einer Aufbauschicht nacheinander mehrere Modelliermaterialien verwendet werden sollen.

In einer weiteren Ausführungsform der Erfindung weist der Werkzeugkopf zusätzlich zu dem wenigstens einen antreibbaren Werkzeug wenigstens ein nicht von dem Antrieb antreibbares Werkzeug, einen Sensor oder dergleichen auf und die Auswahleinrichtung ist ausgebildet zum Überführen dieses nicht antreibbaren Werkzeugs, Sensors oder dergleichen von einer Ruhestellung in eine Arbeitsstellung und/oder von einer Arbeitsstellung in eine Ruhestellung. Dies erfolgt entweder gleichzeitig mit dem Herstellen einer Wirkverbindung zwischen dem wenigstens einen antreibbaren Werkzeug und dem Antrieb oder auch unabhängig davon. Beispielsweise kann es sich bei dem Sensor um einen Meßsensor zum Ausmessen der Bauplattform bzw. der bereits aufgebrachten Schichten oder zum Ermitteln einer Nulllage handeln.

Ein Ausführungsbeispiel der Erfindung wird nachfolgend anhand der Zeichnungen näher erläutert. Hierbei zeigen:
- Fig. 1: eine Seitenansicht eines 3D-Druckers,
- Fig. 2: eine Draufsicht auf den 3D-Drucker aus Fig. 1,
- Fig. 3: eine Draufsicht auf einen Werkzeugkopf mit vier Extrudierwerkzeugen,
- Fig. 4: eine perspektivische Ansicht eines Extrudierwerkzeugs,
- Fig. 5: eine perspektivische Teilansicht einzelner Elemente des Werkzeugkopfes.

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

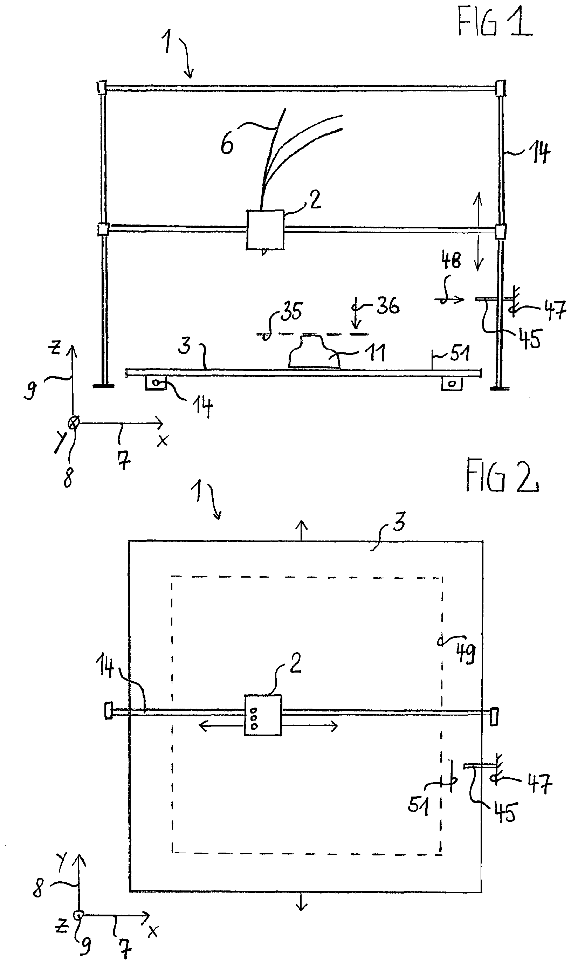

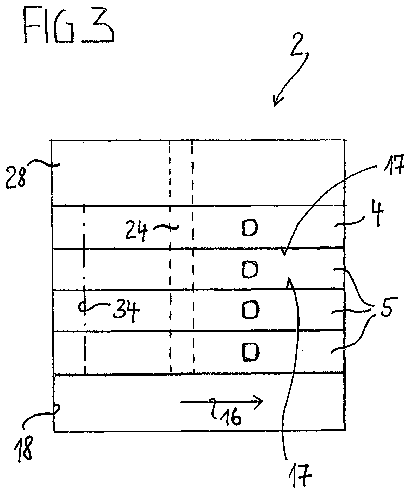

Der 3D-Drucker 1 weist, wie in den Fig.1 und 2 dargestellt, einen Werkzeugkopf 2 und eine Bauplattform 3 auf. Der Werkzeugkopf 2 umfaßt, wie weiter unten im Detail erläutert ist, mehrere Extruderwerkzeuge 4, 5, siehe auch Fig. 3. Mit Hilfe der Extruderwerkzeuge 4, 5 wird nacheinander unterschiedliches Modelliermaterial 6 durch Erwärmung verflüssigt und schichtweise auf der Bauplattform 3 abgelegt. Entsprechend der aufgebrachten Schichtdicke wird der Werkzeugkopf 2 in z-Richtung 9 angehoben. Nach dem Extrudieren des Modelliermaterials 6 kühlt dieses ab und erstarrt. Die einzelnen Schichten verbinden sich dabei zu dem gewünschten dreidimensionalen Objekt 11.

Das Verflüssigen und Extrudieren des Modelliermaterials 6 findet in den Extrudiereinheiten 12 der Extruderwerkzeuge 4, 5 statt. Die Extrudiereinheiten 12 verfügen hierzu entweder über einen separaten Verflüssiger zum Schmelzen des Modelliermaterials 6 und eine Ausgabedüse zum Extrudieren des Modelliermaterials 6 oder aber über eine Heizdüse 13, die sowohl zum Verflüssigen, als auch zum Extrudieren ausgebildet ist.

Der Werkzeugkopf 2 ist in z-Richtung 9 sowie in x-Richtung 7 verfahrbar. Die Bauplattform 3 ist in y-Richtung 8 verfahrbar. Die für das Verfahren des Werkzeugkopfes 2 und der Bauplattform 3 benötigten Konstruktions- und Funktionselemente sind lediglich teilweise abgebildet, so u.a. das Gestell 14, an dem der Werkzeugkopf 2 verfahrbar befestigt ist. Die verwendeten Elektromotoren beispielsweise sind hingegen nicht dargestellt.

Aufbau und Funktionsweise eines solchen 3D-Druckers 1 im allgemeinen sowie eines Extruderwerkzeugs 4, 5 im besonderen sind dem Fachmann bekannt, so daß an dieser Stelle keinen weiterführenden Erläuterungen hierzu bedarf.

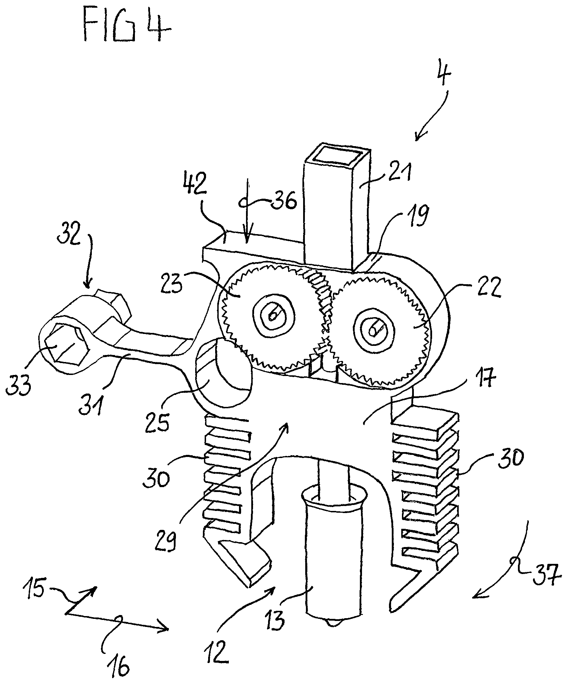

Ein Extruderwerkzeug 4, 5 wie es in einem Werkzeugkopf 2 des 3D-Druckers 1 verwendet werden kann, ist in Fig. 4 abgebildet. Es weist eine in Querrichtung vergleichsweise schmale Bauform auf, so daß es zusammen mit weiteren Extruderwerkzeugen 4, 5 an den Seitenflächen 17 aneinanderliegend in dem Gehäuse 18 des Werkzeugkopfes 2 verbaut werden kann, siehe Fig. 3.

Für die Zufuhr des Modelliermaterials 6 ist an der Oberseite 19 des Extruderwerkzeugs 4, 5 ein Zuführschacht 21 vorgesehen. Zwei sich gegenüberliegende Zahnräder 22, 23 dienen als Vorschubelemente, um der darunter angeordneten Heizdüse 13 der eigentlichen Extrudiereinheit 12 das Modelliermaterial 6 möglichst gleichmäßig zuzuführen. Die Zufuhr ist dann besonders präzise, wenn das Modellierfilament 6 eine Profilierung, beispielsweise in Form von Kerben, aufweist (nicht abgebildet), die mit den Zähnen des Filamentantriebs 22, 23 formschlüssig zusammenwirken. Es kann jedoch auch herkömmliches Modelliermaterial 6 mit einer glatten Oberfläche verwendet werden. Die Heizdüse 13 ist in Längsrichtung 16 des Extruderwerkzeugs 4, 5 beidseitig von Kühlrippen 30 eingefaßt.

Ein Zahnrad 23 ist über eine Antriebswelle 24 des Werkzeugkopfes 2 antreibbar. Die Extruderwerkzeuge 4, 5 sind zu diesem Zweck derart in dem Werkzeugkopf 2 angeordnet, daß die gemeinsame Antriebswelle 24 in Querrichtung 15 durch alle Extruderwerkzeuge 4, 5 hindurchführt. Jedes Extruderwerkzeug 4, 5 weist zu diesem Zweck eine in Querrichtung 15 verlaufende, durchgehende Aufnahmeöffnung 25 für die Antriebswelle 24 auf. Die Aufnahmeöffnung 25 ist dabei um so viel größer als der Durchmesser der Antriebswelle 24, daß das Extruderwerkzeug 4, 5 gemeinsam mit dem anzutreibenden Zahnrad 23 relativ zu der ortsfest mit dem Gehäuse 18 des Werkzeugkopfes 2 verbundenen Antriebswelle 24 bewegbar ist, ohne daß die Antriebswelle 24 den Rand der Aufnahmeöffung 25 berührt. Die Antriebswelle 24 weist zur Herstellung der Wirkverbindung mit dem Zahnrad 23 geeignete Zähne oder dergleichen auf (nicht dargestellt), so daß Antriebswelle 24 und Zahnrad 23 bei hergestellter Wirkverbindung ineinander kämmen.

Um aus der Mehrzahl der in dem Werkzeugkopf 2 vorhandenen Extruderwerkzeuge 4, 5 ein bestimmtes Extruderwerkzeug 4 auszuwählen, wird mit Hilfe einer weiter unten genauer beschriebenen Auswahleinrichtung 26 zwischen einem der Extruderwerkzeuge 4, genauer gesagt einem Antriebselement dieses Extruderwerkzeugs 4, nämlich dem Zahnrad 23, einerseits und dem Antrieb 27, genauer gesagt, der von einem Elektromotor 28 angetriebenen Antriebswelle 24 andererseits eine Wirkverbindung hergestellt.

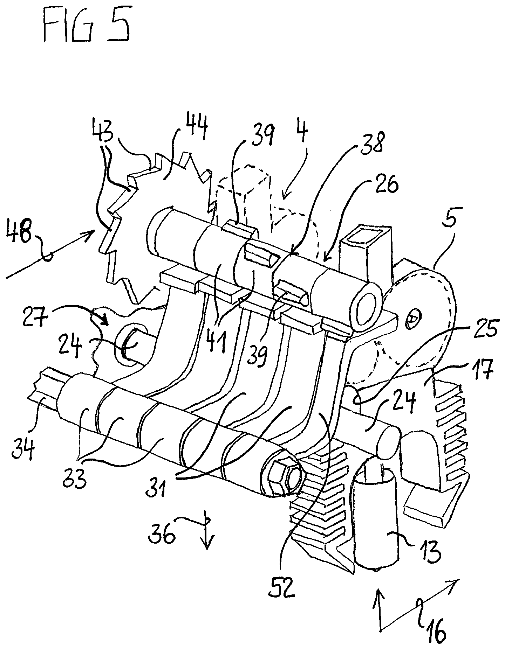

Für das Herstellen der Wirkverbindung wird das ausgewählte Extruderwerkzeug 4, dessen Zahnrad 23 mit der Antriebswelle 24 in Wirkverbindung gebracht werden soll (in Fig. 5 ganz links angeordnet und lediglich mit durchbrochenen Linien angedeutet), von einer Ruhestellung, in der das Extruderwerkzeug 4 nicht in Wirkverbindung mit dem Antrieb 27 steht, in eine Arbeitsstellung, in der das Extruderwerkzeug 4 in Wirkverbindung mit dem Antrieb 27 steht überführt und zu diesem Zweck relativ zu der Antriebswelle 24 bewegt. Die Auswahleinrichtung 26 ist zum Bewegen des ausgewählten Extruderwerkzeugs 4 relativ zu der Antriebswelle 24 ausgebildet, um die Wirkverbindung zwischen diesem Extruderwerkzeug 4 und dem Antrieb 27 herzustellen.

Wie in den Fig. 4 und 5 illustriert, verfügt das ausgewählte Extruderwerkzeug 4 über einen mit dem Basisgehäuse 29 des Extruderwerkzeugs 4 verbundenen Biegearm 31, der sich in Werkzeuglängsrichtung 16 erstreckt. An dem freien Ende 32 des Biegearmes 31 ist ein geeignetes Verbindungselement 33 vorgesehen zur Herstellung einer drehfesten Verbindung mit einer mit dem Gehäuse 18 des Werkzeugkopfes 2 verbundenen ortsfesten Biegeachse 34.

In ihren Ruhestellungen sind die Extruderwerkzeuge 4, 5 in dem Werkzeugkopf 2 derart positioniert, daß sich die Heizdüsen 13 oberhalb der Arbeitsebene 35 in einem ausreichenden Abstand zu der Bauplattform 3 befinden. Wird nun eines der Werkzeuge 4 in Arbeitsrichtung 36 auf die Bauplattform 3 zu mechanisch mit einem Arbeitsdruck beaufschlagt, so erfolgt eine elastische Biegeverformung des an der Biegeachse 34 festgelegten Biegearmes 31 derart, daß sich das Extrudierwerkzeug 4 mit einer Schwenkbewegung 37 aus seiner Ruhestellung in eine Arbeitsstellung bewegt. Die Arbeitsstellung ist diejenige Position des Extruderwerkzeugs 4, in der sich sowohl die Extrudiereinheit 12, als auch das Antriebselement 23 in ihrer Arbeitsposition befinden. Dies ist der Fall, wenn die Extrudiereinheit 12, im vorliegenden Ausführungsbeispiel insbesondere die Heizdüse 13, in der vorgeschriebenen Position zu der Bauplattform 3 angeordnet ist und das Antriebselement, hier das Zahnrad 23, derart zu der Antriebswelle 24 angeordnet ist, daß Antriebswelle 24 und Zahnrad 23 ineinandergreifen und die Zufuhr des Modelliermaterials 6 zu der Heizdüse 13 ermöglichen. In Fig. 5 ist das ganz links angeordnete Extruderwerkzeug 4 in seiner Arbeitsstellung, wenige Millimeter aus seiner Ruhestellung in Richtung Bauplattform 3 ausgelenkt, während sich die drei rechts davon angeordneten Extruderwerkzeuge 5 in ihrer Ruhestellung befinden.

Zur Auswahl des gewünschten Extruderwerkzeugs 4, 5 umfaßt die Auswahleinrichtung 26 eine an dem Gehäuse 18 des Werkzeugkopfes 2 ortsfest angebrachte, drehbare Nockenwelle 38 mit einer Anzahl Steuernocken 39. Dabei ist die Nockenwelle 38 aus einzelnen Nockenwellenelementen 41 zusammengesetzt, wobei jedes Nockenwellenelement 41 einen Steuernocken 39 trägt. Somit ist die Reihenfolge der Nockenwellenelemente 41 und damit die Art und Weise der Ansteuerung der einzelnen Extruderwerkzeuge 4, 5 je nach den Anforderungen des herzustellenden Objektes 11 veränderbar.

Die Steuernocken 39 sind auf der Nockenwelle 38 um definierte Winkel versetzt zueinander angeordnet. Bei einer Drehung der Nockenwelle 38 um einen definierten Drehwinkel beaufschlagt jeweils einer der Steuernocken 39 eine hierfür vorgesehene Anschlagfläche 42 an der Oberseite 19 eines der Extruderwerkzeuge 4, 5 und überführt dieses Extruderwerkzeug 4, 5 mit einer Schwenkbewegung 37 von seiner Ruhestellung in seine Arbeitsstellung.

An dem einen Ende der Nockenwelle 38 ist ein mit der Nockenwelle 38 verbundener, mit Kerben 43 versehener Schaltkranz 44 vorgesehen. Der Schaltkranz 44 ist mittels eines Betätigungsstiftes 45 betätigbar.

Mit Hilfe eines Werkzeugkopfantriebs (nicht abgebildet) wird der Werkzeugkopf 2 gegen einen ortfesten, beispielsweise an einem Gehäuse- oder Rahmenteil 47 des 3D-Druckers 1 befestigten Betätigungsstift 45 gefahren derart, daß der Betätigungsstift 45 in eine der Kerben 43 des Schaltkranzes 44 eingreift und durch eine definierte Eingreifbewegung in Betätigungsrichtung 48 die Nockenwelle 38 um einen definierten Drehwinkel dreht. Unter Umständen sind mehrere Eingreifbewegungen, also ein mehrfaches Verfahren des Werkzeugkopfes 2 in Betätigungsrichtung 48 gegen den Betätigungsstift 45, notwendig, um die gewünschte Position der Steuernocken 39 herbeizuführen, welche die gewünschte Auswahl eines Extruderwerkzeugs 4, 5 bewirkt.

Erfolgt ein Wechsel der Extruderwerkzeuge 4, 5, dann endet die Beaufschlagung des bisher in Wirkverbindung mit der Antriebswelle stehenden Extruderwerkzeugs 4 durch den betreffenden Steuernocken 39 und aufgrund der Elastizität des Biegearmes 31 erfolgt eine selbsttätige Rückstellung dieses Extruderwerkzeugs 4 in seine Ruhestellung, während ein anderes Extruderwerkzeug 5 durch den entsprechenden Steuernocken 39 beaufschlagt in die Arbeitsstellung überführt wird.

Nach dem Auswählen des gewünschten Extruderwerkzeugs 4, 5 erfolgt vorteilhafterweise zunächst eine Reinigung der Extrudiereinheit 12, indem vorzugsweise noch im Bereich des Betätigungsstiftes 45, das restliche Modelliermaterial 6 aus der Heizdüse 13 herausgeschoben und beim Zurückfahren in den Arbeitsbereich 49 an einem zu diesem Zweck auf der Bauplattform 3 vorgesehenen Abstreifblech 51 oder dergleichen abgestreift wird.

In dem hier gezeigten Beispiel sind vier Extruderwerkzeuge 4, 5 in dem Werkzeugkopf 2 vorgesehen. Es können aber beispielsweise auch zwei Extruderwerkzeuge 4, 5 und zwei Fräswerkzeuge (nicht abgebildet) zur Materialbearbeitung des Schichtaufbaus zum Einsatz kommen usw. usf. Auch können zusätzlich zu den hier gezeigten Extruderwerkzeugen 4, 5 weitere angetriebene oder nicht angetriebene Werkzeuge verwendet werden. So ist in Fig. 5 ganz rechts bereits ein zusätzlicher Biegearm 52 dargestellt, an dem beispielsweise ein Meßsensor zum Ermitteln der Nulllage des Werkzeugkopfes 2 angebracht werden kann (nicht dargestellt).

Der 3D-Drucker 1 kann in anderen Ausführungsformen statt eines Werkzeugkopfes 2 auch mehrere Werkzeugköpfe 2 mit jeweils mehreren Extruderwerkzeugen 4, 5 aufweisen, so daß der Aufbau des Objektes 11 mit zwei oder mehr parallel arbeitenden Extrudiereinheiten 12 erfolgt.

Der 3D-Drucker 1 umfaßt eine Datenverarbeitungseinheit (nicht abgebildet), ausgebildet zur Durchführung aller oder ausgewählter im Zusammenhang mit dem Betrieb des 3D-Druckers 1 stehenden Verfahrensschritte, insbesondere im Zusammenhang mit der Ansteuerung der dargestellten und nicht dargestellten Antriebe 27, 28, .... Dabei ist die Datenverarbeitungseinheit entweder in Form von Computerhardware oder in Form von Computersoftware oder in einer Kombination aus Hardware und Software verwirklicht. Soweit die Erfindung in Form von Software, also als Computerprogrammprodukt, verwirklicht ist, werden sämtliche beschriebenen Funktionen durch Computerprogrammanweisungen realisiert, wenn das Computerprogramm auf einem Rechner mit einem Prozessor ausgeführt wird.

### Bezugszeichenliste

- 1: 3D-Drucker
- 2: Werkzeugkopf
- 3: Bauplattform
- 4: ausgewähltes Extruderwerkzeug
- 5: Extruderwerkzeug
- 6: Modelliermaterial
- 7: x-Richtung
- 8: y-Richtung
- 9: z-Richtung
- 10: (frei)
- 11: Objekt
- 12: Extrudiereinheit
- 13: Heizdüse
- 14: Gestell
- 15: Querrichtung
- 16: Längsrichtung
- 17: Seitenfläche
- 18: Gehäuse
- 19: Oberseite
- 20: (frei)
- 21: Zuführschacht
- 22: Zahnrad
- 23: antreibbares Zahnrad
- 24: Antriebswelle
- 25: Aufnahmeöffnung
- 26: Auswahleinrichtung
- 27: Antrieb
- 28: Elektromotor
- 29: Basisgehäuse
- 30: Kühlrippe
- 31: Biegearm
- 32: Freiende
- 33: Verbindungselement
- 34: Biegeachse
- 35: Arbeitsebene
- 36: Arbeitsrichtung
- 37: Schwenkbewegung
- 38: Nockenwelle
- 39: Steuernocken
- 40: (frei)
- 41: Nockenwellenelement
- 42: Anschlagfläche
- 43: Kerbe
- 44: Schaltkranz
- 45: Betätigungsstift
- 46: (frei)
- 47: Rahmenteil
- 48: Betätigungsrichtung
- 49: Arbeitsbereich
- 50: (frei)
- 51: Abstreifblech
- 52: Biegearm

## Patentansprüche

1. Werkzeugkopf (2) zur Verwendung in einer Vorrichtung (1) zur Herstellung eines dreidimensionalen Objektes (11) durch Schmelzschichtung, **gekennzeichnet durch**
- wenigstens zwei antreibbare Werkzeuge (4, 5), von denen wenigstens eines ein Extruderwerkzeug (4) zum Aufschmelzen eines für den schichtweisen Aufbau des Objektes (11) geeigneten Modelliermaterials (6) ist,
- einen gemeinsamen Antrieb (27) für die wenigstens zwei antreibbaren Werkzeuge (4, 5), wobei der Antrieb (27) eine von einem Motor (28) antreibbare, gemeinsame Antriebswelle (24) aufweist, wobei der Antrieb (27) bei dem wenigstens einen Extruderwerkzeug (4) für den Vorschub des Modelliermaterials (6) in eine Extrudiereinheit (12) dient, und
- eine Auswahleinrichtung (26), mit deren Hilfe eine Wirkverbindung zwischen wenigstens einem aus der Anzahl der antreibbaren Werkzeuge (4, 5) ausgewählten Werkzeug (4) und dem Antrieb (27) herstellbar ist, wobei die Auswahleinrichtung (26) ausgebildet ist, die Wirkverbindung für mehrere antreibbare Werkzeuge (4, 5) gleichzeitig herzustellen.

2. Werkzeugkopf (2) nach Anspruch 1, **dadurch gekennzeichnet, daß** die Auswahleinrichtung (26) ausgebildet ist, die Wirkverbindung für jedes antreibbare Werkzeug (4, 5) einzeln herzustellen.

3. Werkzeugkopf (2) nach Anspruch 1 oder 2, **dadurch gekennzeichnet,**
- **daß** dasjenige wenigstens eine antreibbare Werkzeug (4), welches mit dem Antrieb (27) in Wirkverbindung gebracht werden soll, von einer Ruhestellung, in der das Werkzeug (4) nicht in Wirkverbindung mit dem Antrieb (27) steht, in eine Arbeitsstellung, in der das Werkzeug (4) in Wirkverbindung mit dem Antrieb (27) steht überführbar und hierzu relativ zu der Antriebswelle (24) bewegbar ist, und
- **daß** die Auswahleinrichtung (26) ausgebildet ist zum Bewegen dieses Werkzeugs (4) relativ zu der Antriebswelle (24), um die Wirkverbindung zwischen diesem wenigstens einen Werkzeug (4) und dem Antrieb (27) herzustellen.

4. Werkzeugkopf (2) nach Anspruch 3, **dadurch gekennzeichnet, daß** das wenigstens eine antreibbare Werkzeug (4)
- um eine Schwenkachse schwenkbar und/oder
- durch elastische Biegeverformung auslenkbar und dadurch von seiner Ruhestellung in seine Arbeitsstellung bzw. von seiner Arbeitsstellung in seine Ruhestellung überführbar ist.

5. Werkzeugkopf (2) nach Anspruch 3 oder 4, **dadurch gekennzeichnet, daß** die Auswahleinrichtung (26) eine drehbare Nockenwelle (38) umfaßt, welche Nockenwelle (38) eine Anzahl Steuernocken (39) aufweist, wobei jeder Steuernocken (39) bei einer Drehung der Nockenwelle (38) um einen definierten Drehwinkel zum Überführen wenigstens eines antreibbaren Werkzeugs (4) von seiner Ruhestellung in seine Arbeitsstellung und/oder von seiner Arbeitsstellung in seine Ruhestellung dient.

6. Werkzeugkopf (2) nach Anspruch 5, **gekennzeichnet durch** einen mit der Nockenwelle (38) verbundenen, mit Eingriffen (43) versehenen Schaltkranz (44), welcher Schaltkranz (44) mittels eines Betätigungselementes (45) betätigbar ist derart, daß eine definierte Eingreifbewegung des Betätigungselementes (45) eine Drehung der Nockenwelle (38) um einen definierten Drehwinkel bewirkt, um eine Auswahl eines oder mehrerer Werkzeuge (4) vorzunehmen.

7. Werkzeugkopf (2) nach einem der Ansprüche 1 bis 6, **dadurch gekennzeichnet, daß** die Auswahleinrichtung (26) ausgebildet ist zum Überführen eines nicht von dem Antrieb (27) antreibbaren Werkzeugs, eines Sensors oder dergleichen von einer Ruhestellung in eine Arbeitsstellung und/oder von einer Arbeitsstellung in eine Ruhestellung, dies gleichzeitig mit dem Herstellen einer Wirkverbindung zwischen dem wenigstens einen antreibbaren Werkzeug (4, 5) und dem Antrieb (27) oder unabhängig davon.

8. Vorrichtung (1) zur Herstellung eines dreidimensionalen Objektes (11) durch Schmelzschichtung, **gekennzeichnet durch** einen Werkzeugkopf (2) nach einem der Ansprüche 1 bis 7.

9. Vorrichtung (1) nach Anspruch 8, **gekennzeichnet durch**
- ein Betätigungselement (45) zum Betätigen des Schaltkranzes (44) und
- einen Werkzeugkopfantrieb zum Bewegen des Werkzeugkopfes (2) gegen das Betätigungselement (45) oder zum Bewegen des Betätigungselementes (45) gegen den Werkzeugkopf (2) derart, daß das Betätigungselement (45) in eine der Eingriffe (43) des Schaltkranzes (44) eingreift und durch eine definierte Eingreifbewegung die Nockenwelle (38) um einen definierten Drehwinkel dreht.

## Claims

1. A tool head (2) for use in an apparatus (1) for manufacturing a three-dimensional object (11) by melt layering, **characterized by**
- at least two drivable tools (4, 5), at least one of which is an extruder tool (4) for melting a modeling material (6) suitable for building the object (11) in layers;
- a shared drive system (27) for the at least two drivable tools (4, 5), wherein the drive system (27) comprises a shared drive shaft (24) drivable by a motor (28), wherein the drive system (27) causes the at least one extruder tool (4) to feed the modeling material (6) into an extrusion unit (12); and
- a selection device (26) with which an operative connection is establishable between at least one tool 4) selected from the number of drivable tools (4, 5) and the drive system (27), wherein the selection device (26) is embodied to establish the operative connection simultaneously for multiple drivable tools (4, 5).

2. The tool head (2) according to Claim 1, **characterized in that** the selection device (26) is embodied to establish the operative connection individually for each drivable tool (4, 5).

3. The tool head (2) according to Claim 1 or 2, **characterized in that**
- the at least one drivable tool (4) which is to be brought into an operative connection with the drive system (27) is transferable from an idle position in which the tool (4) is not operatively connected to the drive system (27) into a working position in which the tool (4) is operatively connected to the drive system (27), and for that purpose is movable relative to the drive shaft (24), and
- the selection device (26) is embodied to move that tool (4) relative to the drive shaft (24) in order to establish the operative connection between that at least one tool (4) and the drive system (27).

4. The tool head (2) according to Claim 3, **characterized in that** the at least one drivable tool (4)
- is pivotable around a pivot shaft, and/or
- is deflectable by elastic flexural deformation, and is thereby transferrable from its idle position into its working position or from its working position into its idle position.

5. The tool head (2) according to Claim 3 or 4, **characterized in that** the selection device (26) encompasses a rotatable camshaft (38), which camshaft (38) comprises a number of control cams (39), each control cam (39) serving, upon a rotation of the camshaft (38) through a defined rotation angle, to transfer at least one drivable tool (4) from its idle position into its working position and/or from its working position into its idle position.

6. The tool head (2) according to Claim 5, **characterized by** a selector wheel (44) connected to the camshaft (38) and equipped with indentations (43), which selector wheel (44) is actuatable by means of an actuation element (45) in such a way that a defined engaging motion of the actuation element (45) causes a rotation of the camshaft (38) through a defined rotation angle in order to perform a selection of one or more tools (4).

7. The tool head (2) according to one of Claims 1 to 6, **characterized in that** the selection device (26) is embodied to transfer a tool not drivable by the drive system (27), a sensor, or the like from an idle position into a working position and/or from a working position into an idle position, simultaneously with the establishment of an operative connection between the at least one drivable tool (4, 5) and the drive system (27), or independently thereof.

8. An apparatus (1) for manufacturing a three-dimensional object (11) by melt layering, **characterized by** a tool head (2) according to one of Claims 1 to 7.

9. The apparatus (1) according to Claim 8, **characterized by**
- an actuation element (45) for actuating the selector wheel (44), and
- a tool head drive system for moving the tool head (2) against the actuation element (45) or for moving the actuation element (45) against the tool head (2), in such a way that the actuation element (45) engages into one of the indentations (43) of the selector wheel (44) and, by way of a defined engagement motion, rotates the camshaft (38) through a defined rotation angle.

## Revendications

1. Tête d'outil (2) à utiliser dans un dispositif (1) pour la fabrication d'un objet tridimensionnel (11) par revêtement fusible, **caractérisée par**
- au moins deux outils pouvant être entraînés (4, 5), dont au moins un est un outil d'extrudeuse (4) pour la fusion d'un matériau de modélisation (6) convenant pour la construction par couches de l'objet (11),
- un entraînement commun (27) pour lesdits au moins deux outils pouvant être entraînés (4, 5), dans lequel l'entraînement (27) présente un arbre d'entraînement commun (24) pouvant être entraîné par un moteur (28), dans lequel l'entraînement (27) sert, pour ledit au moins un outil d'extrudeuse (4), pour l'avance du matériau de modélisation (6) dans une unité d'extrusion (12), et
- un dispositif de sélection (26), à l'aide duquel une liaison active entre au moins un outil (4) sélectionné parmi le nombre des outils pouvant être entraînés (4, 5) et l'entraînement (27) peut être établie, dans lequel le dispositif de sélection (26) est configuré pour établir la liaison active simultanément pour plusieurs outils pouvant être entraînés (4, 5).

2. Tête d'outil (2) selon la revendication 1, **caractérisée en ce que** le dispositif de sélection (26) est configuré pour établir la liaison active individuellement pour chaque outil pouvant être entraîné (4, 5).

3. Tête d'outil (2) selon la revendication 1 ou 2, **caractérisée en ce que**
- ledit au moins un outil pouvant être entraîné (4), qui doit être mis en liaison active avec l'entraînement (27), peut être amené d'une position de repos, dans laquelle l'outil (4) ne se trouve pas en liaison active avec l'entraînement (27), à une position de travail, dans laquelle l'outil (4) se trouve en liaison active avec l'entraînement (27), et peut à cet effet être déplacé par rapport à l'arbre d'entraînement (24), et
- le dispositif de sélection (26) est configuré pour déplacer cet outil (4) par rapport à l'arbre d'entraînement (24), afin d'établir la liaison active entre ledit au moins un outil (4) et l'entraînement (27) .

4. Tête d'outil (2) selon la revendication 3, **caractérisée en ce que** ledit au moins un outil pouvant être entraîné (4) peut
- pivoter autour d'un axe de pivotement et/ou
- être dévié par une déformation de flexion élastique et peut ainsi être amené de sa position de repos à sa position de travail ou de sa position de travail à sa position de repos.

5. Tête d'outil (2) selon la revendication 3 ou 4, **caractérisée en ce que** le dispositif de sélection (26) comprend un arbre à cames rotatif (38), ledit arbre à cames (38) présente un nombre de cames de commande (39), dans laquelle chaque came de commande (39) sert, lors d'une rotation de l'arbre à cames (38) d'un angle de rotation défini, pour amener au moins un outil pouvant être entraîné (4) de sa position de repos à sa position de travail et/ou de sa position de travail à sa position de repos.

6. Tête d'outil (2) selon la revendication 5, **caractérisée par** une couronne de commutation (44) assemblée à l'arbre à cames (38) et munie d'encoches (43), ladite couronne de commutation (44) peut être actionnée au moyen d'un élément d'actionnement (45) de telle manière qu'un mouvement d'engagement défini de l'élément d'actionnement (45) provoque une rotation de l'arbre à cames (38) d'un angle de rotation défini, afin d'opérer une sélection d'un ou de plusieurs outils (4) .

7. Tête d'outil (2) selon l'une quelconque des revendications 1 à 6, **caractérisée en ce que** le dispositif de sélection (26) est configuré pour amener un outil ne pouvant pas être entraîné par l'entraînement (27), un capteur ou similaire d'une position de repos à une position de travail et/ou d'une position de travail à une position de repos, soit simultanément à la réalisation d'une liaison active entre ledit au moins un outil pouvant être entraîné (4, 5) et l'entraînement (27) soit indépendamment de celle-ci.

8. Dispositif (1) pour la fabrication d'un objet tridimensionnel (11) par revêtement fusible, **caractérisé par** une tête d'outil (2) selon l'une quelconque des revendications 1 à 7.

9. Dispositif (1) selon la revendication 8, **caractérisé par**
- un élément d'actionnement (45) pour actionner la couronne de commutation (44), et
- un entraînement de tête d'outil pour déplacer la tête d'outil (2) contre l'élément d'actionnement (45) ou pour déplacer l'élément d'actionnement (45) contre la tête d'outil (2), de telle manière que l'élément d'actionnement (45) s'engage dans une des encoches (43) de la couronne de commutation (44) et que, par un mouvement d'engagement défini, il fasse tourner l'arbre à cames (38) d'un angle de rotation défini.
